# EUROPEAN PATENT SPECIFICATION

(11) **EP 1 507 437 B1**
(45) Date of publication and mention of the grant of the patent: **28.11.2007**
(21) Application number: 03018496.4
(22) Date of filing: 14.08.2003
(51) Int. Cl.: H04Q 11/00

(54) **A method and apparatus for aggregating incoming packets into optical bursts for an optical burst switched network**
Verfahren und Apparat zum Aggregieren von ankommenden Paketen in optische Bursts für ein optisches Netz mit Burstschaltung
Méthode et appareil pour l'aggrégation de paquets arrivant dans des rafales optiques pour un réseau optique avec commutation en rafale

(43) Date of publication of application: 16.02.2005
(73) Proprietor: NOKIA SIEMENS NETWORKS GMBH & CO. KG, 81541 München (DE)
(72) Inventor: Rodrigo, Miguel De Vega, 81737 München (DE)

(56) References cited:
- WO-A-01/84875
- US-A1- 2003 099 243
- YOO M ET AL: "NEW OPTICAL BURST SWITCHING PROTOCOL FOR SUPPORTING QUALITY OF SERVICE" PROCEEDINGS OF THE SPIE, SPIE, BELLINGHAM, VA, US, vol. 3531, November 1998 (1998-11), pages 396-405, XP000950072 ISSN: 0277-786X

## Description

In Optical Burst-Switched networks, or so called OBS networks, packets, e.g. Internet Protocol (IP) packets, Asynchrony Transfer Mode (ATM) cells or protocol data units (PDUs), are aggregated into optical bursts in order to be transferred through the OBS network or respective optical network. The conversion of packets into optical bursts takes place in the edge nodes of an OBS network according to a certain aggregation strategy. The solutions so far provide two main aggregation strategies: the aggregation strategy with timeouts and the aggregation strategy with a buffer limit.

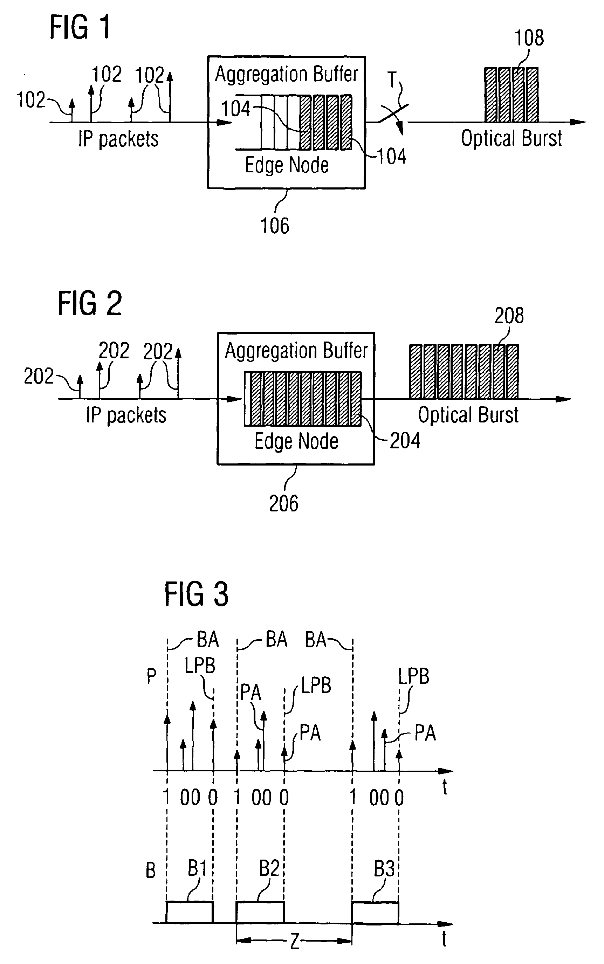

First we will discuss the aggregation strategy with timeouts. A schematic example is shown in Figure 1. In this scheme, packets 102 are added or padded to the burst 104 which is being generated in a buffer 106 until a certain timer T expires. Then the burst 108 is sent.

The second, Aggregation strategy with buffer limit will be discussed with reference to Figure 2. In this scheme, packets 202 are added or padded to the burst 204 which is being generated in a buffer 206 until the buffer is full. Then the burst 208 is sent.

Once the packets are transformed into bursts and sent into the OBS network, they travel in the OBS network through a series of optical switches to a certain destination. At best, these optical switches have limited storage capabilities, e.g. fiber delay lines, and at worst, no storage capabilities at all in the normal case. Therefore, collisions among optical bursts occur. Major performance parameters of an OBS network are thus the burst blocking probability, the throughput and the delay.

The international publication WO 01/84875 describes a robust transport of IP traffic over WDM using optical burst switching by selecting the offset between a control packet and a data burst to optimize the traffic flow.

The two main aggregation strategies timeout and buffer limit have the disadvantage of a certain blocking probability and maximum achievable throughput.

It is an object of the invention to reduce the blocking probability and increase the throughput of an OBS network.

This object is achieved by the features recited in claim 1, 4 and 8.

The novel inventive aggregation strategy is based on the following widely accepted assumption for highly multiplexed traffic (core networks): the packet arrival rate process is determined according to a Poisson distribution. With this assumption, the idea is to consider the random selection property of any Poisson process, in order to obtain a Poisson process of a lower arrival rate.

This lower-rate Poisson process will mark the beginning of a new optical burst or the end of an optical burst. So it is possible to assure that the burst send and arrival process is Poisson. In addition, the inter-arrival times between bursts will be negative-exponential distributed, as the inter-arrival times of any Poisson process.

It shall be appreciated that advantages of the invention are:
- A lower blocking probability in the optical switches is provided, as compared to the standard aggregation strategie
- Predictability of the blocking probability. The blocking probability can be calculated with the Erlang-B formula. Whereas for the other aggregation strategies no analytical formula is known.
- Due to the lower blocking probability a higher throughput in optical switches of the OBS network is achieved.
- Predictability of the throughput. The throughput, unlike with the prior art strategies, can be calculated with the help of the Erlang B formula.
- It is easier to calculate waiting times for bursts and/or headers of bursts.
- A lower waiting time for the optical headers in the optical switches.
- In the case burst buffering is available, e.g. by the use of fiber delay lines, a lower waiting time for bursts in the optical switch is achieved.

Further developments of the invention are identified in subclaims.

An exemplary embodiment of the invention is described in greater detail below with reference to a drawing.

Shown in the drawing are:
FIG 1 the initially cited prior art.
FIG 2 the initially cited prior art.
FIG 3 an schematically example for the aggregation and random selection process.
FIG 4 a graph with the blocking probability as a function of the load for different aggregation strategies.

Figure 3 shows two associated timelines P and B. On the first timeline P packets PA, pictured as arrow line, are received in chronological order, e.g. IP packets, ATM cells or PDUs. Every packet is associated with a generated random binary digit. A binary digit has a first and a second value, e.g. 1 for the first value and 0 for the second value or opposite.

So, every packet is associated either with a 1 or a 0. The random binary digits can be generated by a Bernoulli random generator, according to a Bernoulli probability distribution. The probability for every value of the random binary digit, thus the probability (p) for the 1's and (1-p) for the 0's, is determined by a certain probability distribution, e.g. p(1)=0,01 and p(0)=0,99. These packets are aggregated in a buffer to accumulate an optical burst. A packet with an associated first value, e.g. with a 1 indicates a transition between optical bursts, e.g. the beginning of a new burst. In figure 3 this is labeled with BA. The chronological last packet with a 0 before a packet with a 1, is the last packet of the burst, marked with LPB in figure 3. On the second timeline B in figure 3 the resulting Bursts B1, B2 and B3 are shown. The time difference Z between the beginning of two successive bursts is called inter-arrival time. The aggregation delay is the delay experienced by a packet in the edge node until the burst to which it belongs is completed. After appearance of a packet with a 1, a new burst begins and the old burst is send into the OBS network.

The used probability distribution determines the average number of packets per burst. E.g. the average number of packets per burst is equal to 1/p(1). For the example, if p(1)=0,01, the average number of packets per burst is 1/p(1)=100 packets per burst.

The method can also be realized, that the second value indicates a transition between optical bursts.

Also the first value indicates, instead of the beginning of a new burst, the end of the aggregated packets and by that the end of the aggregated burst. The main idea is, that a generated random digit with a certain probability indicates the beginning or the end of a burst, which consists of aggregated packets, e.g. IP packets.

The invention can be implemented by the following steps/algorithm:
- Every time the edge node receives a packet, e.g. an IP packet, it sends it to the buffer.
- Then the edge node reads the generated associated random binary digit / random number corresponding to the next packet.
- If the associated random binary digit / random number for the next packet is a first value, e.g. a 1, the accumulated burst in the buffer is sent.
- Otherwise, do nothing.

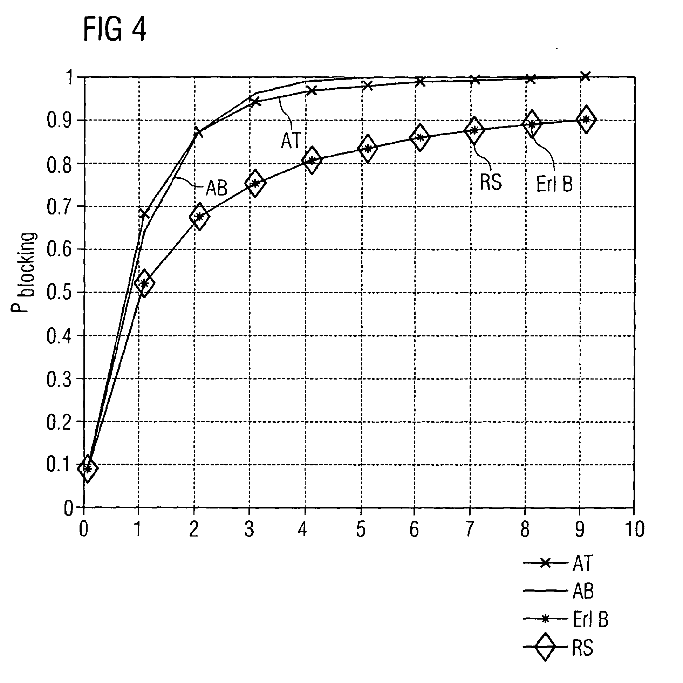

A simulation has been done with Matlab^{®} in order to calculate the blocking probability in an optical switch with no wavelength conversion available as a function of the load. The results are presented in figure 4. In figure 4 AT means aggregation strategy with aggregation timer, AB means aggregation strategy with aggregation buffer, Erl B means theoretically possible load according to Erlang B formula and RS means inventive aggregation strategy with random selection.

It can be observed that the inventive random selection strategy leads to the lowest blocking probability and furthermore it matches the Erlang-B formula predictions.

## Claims

1. A method for aggregating incoming packets (102, 202, PA) into optical bursts (108, 208, B1, B2, B3) in an edge node of an Optical Burst Switched Network, comprising the steps of:
storing the incoming packets (102, 202, PA) to generate an optical burst (108, 208, B1, B2, B3);
associating each incoming packet (102, 202, PA) with a generated random binary digit with a probability for a first and a second value of the binary digit; and
wherein, a packet with a binary digit having the first value indicates a transition between optical bursts,
sending the optical burst (108, 208, B1, B2, B3) with the aggregated packets when a transition is indicated by the first value.

2. The Method as claimed in claim 1,
**characterized in that**,
wherein the transition is a beginning of the new optical burst (108, 208, B1, B2, B3).

3. The Method as claimed in claim 1,
**characterized in that**,
wherein the transition is an end of the optical burst (108, 208, B1, B2, B3).

4. The Method as claimed in claim 1,
**characterized in that**,
whereby every time a received incoming packet (102, 202, PA) is stored and a random binary digit, with a probability for the first and the second value of the binary digit, is generated and compared with the first value of the binary digit and, if equal, the stored packets are sent as an optical burst (108, 208, B1, B2, B3).

5. The Method as claimed in one of claims 1 to 4,
**characterized in that**,
where said optical burst (108, 208, B1, B2, B3) is sent through the Optical Burst Switched Network.

6. The Method as claimed in one of claims 1 to 5,
**characterized in that**,
where said random binary digit is generated according to a Bernoulli probability distribution.

7. The Method as claimed in one of claims 1 to 6,
**characterized in that**,
that IP packets are used as incoming packets (102, 202, PA).

8. An edge node apparatus for an Optical Burst Switched Network for aggregating incoming packets into optical bursts, comprising:
a buffer (106, 206) to accumulate the incoming packets (102, 202, PA) as an optical burst (108, 208, B1, B2, B3) ; and
a random generator to generate a sequence of binary digits with a probability for a first and a second value of the binary digit, such that every incoming packet is associated with a generated binary digit,
wherein an packet with the first value of the binary digit indicates a transition between optical bursts; and
wherein the optical burst with the aggregated packets (104, 204) is sent when a transition is indicated by the first value.

9. The apparatus as claimed in claim 8,
**characterized in that**,
wherein the random generator is a Bernoulli random generator that generates a sequence of binary digits in accordance with a Bernoulli probability distribution.

## Patentansprüche

1. Verfahren zum Aggregieren von ankommenden Paketen (102, 202, PA) in optische Bursts (108, 208, B1, B2, B3) in einem Randknoten eines optischen Netzes mit Burstschaltung mit folgenden Schritten:
Speichern der ankommenden Pakete (102, 202, PA) zum Erzeugen eines optischen Burst (108, 208, B1, B2, B3);
Zuordnen jedes ankommenden Pakets (102, 202, PA) zu einer erzeugten zufälligen Binärziffer mit einer Wahrscheinlichkeit für einen ersten und einen zweiten Wert der Binärziffer; und
wobei ein Paket mit einer Binärziffer des ersten Werts einen Übergang zwischen optischen Bursts bezeichnet,
Senden des optischen Bursts (108, 208, B1, B2, B3) mit den aggregierten Paketen, wenn ein Übergang durch den ersten Wert bezeichnet wird.

2. Verfahren nach Anspruch 1, **dadurch gekennzeichnet, dass** der Übergang ein Beginn des neuen optischen Burst (108, 208, B1, B2, B3) ist.

3. Verfahren nach Anspruch 1, **dadurch gekennzeichnet, dass** der Übergang ein Ende des optischen Burst (108, 208, B1, B2, B3) ist.

4. Verfahren nach Anspruch 1, **dadurch gekennzeichnet, dass** jedesmal ein empfangenes ankommendes Paket (102, 202, PA) gespeichert wird und eine zufällige Binärziffer, die eine Wahrscheinlichkeit für den ersten und den zweiten Wert der Binärziffer aufweist, erzeugt wird und mit dem ersten Wert der Binärziffer verglichen wird, und bei Gleichheit die gespeicherten Pakete als ein optischer Burst (108, 208, B1, B2, B3) gesendet werden.

5. Verfahren nach einem der Ansprüche 1 bis 4, **dadurch gekennzeichnet, dass** der besagte optische Burst (108, 208, B1, B2, B3) über das optische Netz mit Burstschaltung gesendet wird.

6. Verfahren nach einem der Ansprüche 1 bis 5, **dadurch gekennzeichnet, dass** die zufällige Binärziffer gemäß einer Bernoulli-Wahrscheinlichkeitsverteilung erzeugt wird.

7. Verfahren nach einem der Ansprüche 1 bis 6, **dadurch gekennzeichnet, dass** IP-Pakete als ankommende Pakete (102, 202, PA) verwendet werden.

8. Randknotenvorrichtung für ein optisches Netz mit Burstschaltung zum Aggregieren von ankommenden Paketen in optische Bursts mit:
einem Puffer (106, 206) zum Kumulieren der ankommenden Pakete (102, 202, PA) als ein optischer Burst (108, 208, B1, B2, B3); und
einem Zufallsgenerator zum Erzeugen einer Folge von Binärziffern mit einer Wahrscheinlichkeit für einen ersten und einen zweiten Wert der Binärziffer, derart, dass jedem ankommenden Paket eine erzeugte Binärziffer zugeordnet wird,
wobei ein Paket mit dem ersten Wert der Binärziffer einen Übergang zwischen optischen Bursts bezeichnet,
wobei der optische Burst mit den aggregierten Paketen (104, 204) gesendet wird, wenn ein Übergang durch den ersten Wert bezeichnet wird.

9. Vorrichtung nach Anspruch 8, **dadurch gekennzeichnet, dass** der Zufallsgenerator ein Bernoulli-Zufallsgenerator ist, der eine Folge von Binärziffern gemäß einer Bernoulli-Wahrscheinlichkeitsverteilung erzeugt.

## Revendications

1. Procédé pour agréger des paquets entrants (102, 202,PA) dans des rafales optiques (108, 208, B1, B2, B3) dans un noeud marginal d'un réseau optique avec commutation en rafale, comprenant les étapes qui consistent:
à stocker les paquets entrants (102, 202, PA) pour générer une rafale optique (108, 208, B1, B2, B3) ;
à associer chaque paquet entrant (102, 202, PA) à un chiffre binaire aléatoire généré avec une probabilité pour une première et une deuxième valeur du chiffre binaire ; et
dans lequel, un paquet avec un chiffre binaire ayant la première valeur indique une transition entre des rafales optiques ;
à envoyer la rafale optique (108, 208, B1, B2, B3) avec les paquets agrégés lorsqu'une transition est indiquée par la première valeur.

2. Procédé selon la revendication 1, **caractérisé en ce que** la transition est un commencement de la nouvelle rafale optique (108, 208, B1, B2, B3).

3. Procédé selon la revendication 1, **caractérisé en ce que** la transition est une extrémité de la rafale optique (108, 208, B1, B2, B3).

4. Procédé selon la revendication 1, **caractérisé en ce que** chaque fois qu'un paquet entrant reçu (102, 202, PA) est stocké et qu'un chiffre binaire aléatoire, avec une probabilité pour la première et la deuxième valeur du chiffre binaire, est généré et comparé à la première valeur du chiffre binaire et, s'il est égal, les paquets stockés sont envoyés comme rafale optique (108, 208, B1, B2, B3).

5. Procédé selon l'une des revendications 1 à 4, **caractérisé en ce que** ladite rafale optique (108, 208, B1, B2, B3) est envoyée par l'intermédiaire du réseau optique avec commutation en rafale.

6. Procédé selon l'une quelconque des revendications 1 à 5, **caractérisé en ce que** ledit chiffre binaire aléatoire est généré selon une distribution de probabilités Bernoulli.

7. Procédé selon l'une des revendications 1 à 6, **caractérisé en ce que** des paquets IP sont utilisés comme paquets entrants (102, 202, PA).

8. Appareil à noeud marginal pour un réseau optique avec commutation en rafale pour agréger des paquets entrants dans des rafales optiques, comprenant :
un tampon (106, 206) pour accumuler les paquets entrants (102, 202, PA) comme rafale optique (108, 208, B1, B2, B3) ; et
un générateur aléatoire pour générer une séquence de chiffres binaires avec une probabilité pour une première et une deuxième valeur du chiffre binaire, de telle sorte que chaque paquet entrant est associé à un chiffre binaire généré,
dans lequel un paquet avec la première valeur du chiffre binaire indique une transition entre des rafales optiques ; et
dans lequel la rafale optique avec les paquets agrégés (104, 204) est envoyée lorsqu'une transition est indiquée par la première valeur.

9. Appareil selon la revendication 8, **caractérisé en ce que** le générateur aléatoire est un générateur aléatoire Bernoulli qui génère une séquence de chiffres binaires conformément à une distribution de probabilités Bernoulli.
